# EUROPÄISCHE PATENTANMELDUNG

(11) **EP 1 569 483 A2**
(43) Veröffentlichungstag der Anmeldung: **31.08.2005**
(21) Anmeldenummer: 04106072.4
(22) Anmeldetag: 25.11.2004
(51) Int. Cl.: H04Q 7/38

(54) **Verfahren und Anordnung zur Positionsbestimmung eines Endgerätes in einem Zellularen Mobilfunknetz**

(30) Priorität: 26.02.2004 DE 102004009291
(71) Anmelder: SIEMENS AKTIENGESELLSCHAFT, 80333 München (DE)
(72) Erfinder: Aigner, Clemens, 1210 Wien (AT); Böhm, Peter, 2732 Willendorf (AT); Otto, Manfred, 1040 Wien (AT)

(57) **Zusammenfassung**

Verfahren zur Positionsbestimmung eines Endgerätes (14) in einem zellularen Mobilfunknetz (10), wobei im Endgerät (14) zur Auswahl einer Versorgungszelle (CEL) Netzmessungen durchgeführt werden, mit folgenden Schritten: Übermitteln (S2) einer Messdaten-Anforderungsnachricht von einem Positionsbestimmungs-Server (16) an das Endgerät (14), Auslesen (S3) von durch die Netzmessungen bestimmten Messdaten aus einem Messdatenspeicher (40) im Endgerät (14) in Reaktion auf die Anforderungsnachricht, Übermitteln (S4) einer Antwortnachricht mit den ausgelesenen Messdaten vom Endgerät (14) an den Positionsbestimmungs-Server (16), Berechnen (S5) der Position des Endgerätes (14), basierend auf den übermittelten Messdaten, im Positionsbestimmungs-Server (16).

## Beschreibung

Die Erfindung betrifft ein Verfahren sowie eine Anordnung zur Positionsbestimmung eines Endgerätes in einem zellularen Mobilfunknetz.

Die wesentliche Eigenschaft eines Mobilfunknetzes besteht darin, dass ein Teilnehmer Telekommunikationsdienste von jedem beliebigem Ort innerhalb des Versorgungsgebietes nutzen kann. Insbesondere in zellularen Mobilfunknetzen, wie GSM-, GPRS- oder UMTS-Netzen sind verschiedene Dienste bekannt, deren Funktionalität mit der Position des Teilnehmers verknüpft ist, und die hierdurch dem Benutzer einen Mehrwert gegenüber der reinen Mobiltelefonie bieten.

Beispiele solcher sogenannter "Location Based Services" (LBS) oder auch "Location Based Applications" sind:
- Notruf mit automatischer Übermittlung der aktuellen Position,
- Katastrophenwarnungen an alle Mobilfunkteilnehmer, die sich in einem betroffenen Gebiet aufhalten,
- positionsabhängige Vergebührung, so dass beispielsweise für eine Privatperson in ihrem Heimbereich oder für Firmenangehörige am Arbeitsplatz günstigere Gebühren berechnet werden,
- Verkehrsüberwachung oder Verfolgung der Positionen von Fahrzeugen (z.B. Taxis oder Lkws) und Transportgütern durch eine Zentrale.

Es ist zu erwarten, dass zukünftig auch positionsbezogene Informationsdienste an Bedeutung weiter zunehmen werden.

Für alle LBS muss die Position eines Endgerätes oder mehrerer Endgeräte bestimmt werden, welche sowohl Mobiltelefone als auch mit entsprechenden Funkeinrichtungen ausgestattete Computer oder Mikroprozessoren sein können. Das einfachste Verfahren beruht darauf, dass im Funknetz bekannt ist, in welcher Zelle ein Mobilfunkgerät sich befindet. Hierzu ist keine Modifikation am Mobilfunk-Endgerät erforderlich. In den Kernbereichen von Großstädten, bei denen die Zellradien in Bereichen von einigen hundert Metern liegen, ist hierdurch bereits eine für viele Zwecke brauchbare Positionsbestimmung möglich. In ländlichen Gebieten mit großen Zellen ist dieses SAI("Service Area Identity")-Verfahren jedoch für zahlreiche Anwendungsfälle zu ungenau.

Das SAI-Verfahren kann dadurch verfeinert werden, dass die Zeit gemessen wird, die für die Übermittlung von Signalen von der Basisstation der Zelle zum Endgerät und zurück benötigt wird, d.h. die "Round Trip Time" (RTT). Unter "Basisstation" wird hier die Sende-/Empfangsanlage einer Basisstation verstanden, d.h. die "Base Transceiver Station" (BTS). Bei dem SAI+RTT-Verfahren ist eine Genauigkeit in der Positionierung von etwa 100 m in einem streifenförmigen Bereich um die Basisstation herum möglich.

Ein weiteres bekanntes Verfahren, bei dem keine Modifikation am Endgerät vorgenommen werden muss, besteht darin, an mehreren bekannten Orten die Ankunftszeiten eines vom Endgerät ausgesandten Signals zu messen. Hierzu werden an mehreren Stellen im Netz sogenannte "Location Measurements Units" (LMUs) angeordnet. Diese können am Ort einer Basisstation oder auch an beliebigen anderen Orten installiert werden.

Um eine Positionsbestimmung vorzunehmen, wird das Endgerät durch eine entsprechende Nachricht dazu veranlasst, beispielsweise sogenannte Handover-Access-Bursts zu senden. Mindestens drei LMUs messen die Ankunftszeiten dieser Bursts und leiten ihre Messdaten an eine Einrichtung im Mobilfunknetz, das Mobile Location Center (MLC), weiter. Aus der Differenz zwischen jeweils zwei Ankunftszeiten und den bekannten Positionen der zugehörigen LMUs kann das MLC darauf schließen, dass sich die Mobilstation auf einer bestimmten, zwischen den LMUs verlaufenden Hyperbel befindet. Aus den Schnittpunkten mehrerer Hyperbeln ergibt sich die Position des Endgerätes. Obwohl mit diesen, sogenannten OTD("Observed Time Difference")-Verfahren Genauigkeiten in der Größenordnung von 30 m möglich sind, ist der beträchtliche Aufwand nachteilig, der sich für den Netzbetreiber dadurch ergibt, dass er eine Vielzahl von LMUs installieren muss.

Eine Positionsbestimmung durch Messungen von Ankunftszeiten von Signalen ist auch mit hierfür modifizierten Endgeräten möglich. Bei diesen E-OTD("Enhanced-OTD")-Verfahren misst das Endgerät die Differenz zwischen den Ankunftszeiten bestimmter Signale, die von mehreren Basisstationen abgestrahlt werden. Aus den gemessenen Zeitdifferenzen lässt sich die Position berechnen, wenn entweder die vermessenen Signale synchron ausgestrahlt werden oder die Zeitdifferenz zwischen den Aussendezeitpunkten bekannt ist. Auch E-OTD-Verfahren erfordern also einen zusätzlichen Aufwand dadurch, dass die Basisstationen dazu ausgebildet sein müssen, die zusätzlichen Signale zu senden. Das Mobilfunkgerät muss eine beträchtliche Verarbeitungskapazität aufweisen, um die Positionsberechnung durchführen zu können.

Eine weitere Klasse von Verfahren zur Positionsbestimmung nutzt GPS ("Global Positioning System"), wobei die Endgeräte mit einem GPS-Empfänger ausgerüstet sein müssen. Die Positionierung mittels GPS (und in der Zukunft mit dem europäischen GALILEO-System) bietet eine sehr hohe Messgenauigkeit von 10 m oder weniger. Allerdings müssen für diese Verfahren hinreichende Empfangspegel (Sichtkontakt) von wenigstens vier Satelliten vorliegen. Diese Voraussetzung ist insbesondere innerhalb von Gebäuden oder in engen Straßenschluchten kritisch. Darüber hinaus wird ein Endgerät durch den GPS-Empfänger nicht unbeträchtlich verteuert. Für die im Aufbau befindlichen UMTS-Netze sind auch Mikro- und Picozellen vorgesehen, die insbesondere im Inneren von Gebäuden und im Zentralbereich der Großstädte eine Versorgung sicherstellen werden. Hierbei werden alle auf Basis des Funknetzes funktionierenden Positioniermethoden proportional zu den Zellgrößen genauer.

Gegenüber diesem Stand der Technik besteht die Aufgabe der Erfindung darin, ein Verfahren und eine Anordnung zur Positionsbestimmung eines Endgerätes in einem zellularen Mobilfunknetz vorzuschlagen, die eine hohe Positionsgenauigkeit ermöglichen und gleichzeitig die Zahl der erforderlichen, zusätzlichen Einrichtungen bzw. Ausstattungen im Netzwerk und bei den Endgeräten minimieren.

Diese Aufgabe wird durch ein Verfahren mit den Merkmalen des Anspruchs 1 und eine Anordnung mit den Merkmalen des Anspruchs 12 gelöst.

Ein wesentlicher Gedanke der Erfindung besteht darin, zur Positionsbestimmung solche Messdaten heranzuziehen, die nicht gesondert durch die Übermittlung und Ausmessung zusätzlicher Signale zwischen Basisstationen und Endgerät bestimmt werden müssen. Vorteilhaft sollten vielmehr Daten herangezogen werden, die ohnehin im Endgerät vorliegen, und bei denen der Transfer dieser Informationen an eine zentral oder dezentral vorliegende Einrichtung zur weiteren Berechnung und Verwaltung ohne Zusatzaufwand und mit geringstmöglicher Belastung der Netzinfrastruktur stattfinden kann. Werden derartige Daten vom Endgerät abgefragt, kann eine Position des Endgerätes in der entsprechend ausgebildeten Einrichtung im Netz bestimmt werden.

Konkret wird ein Verfahren vorgeschlagen, bei dem in einem ersten Schritt eine Messdaten-Anforderungsnachricht von einem Positionsbestimmungs-Server an das Endgerät übermittelt wird. Der Positionsbestimmungs-Server kann eine spezielle Ausprägung einer MLC sein, beispielsweise einer Gateway-MLC.

In einem zweiten Schritt werden Messdaten, die durch Netzmessungen zur Auswahl einer Versorgungszelle im Endgerät durchgeführt wurden, aus einem Messdatenspeicher in Reaktion auf die Anforderungsnachricht ausgelesen. Es handelt sich hierbei insbesondere um solche Netzmessungen, die ständig im Endgerät durchgeführt werden.

In einem weiteren Schritt werden die ausgelesenen Messdaten vom Endgerät an den Positionsbestimmungs-Server in Form einer Messdaten-Antwortnachricht übermittelt. Schließlich wird die Position des Endgerätes im Positionsbestimmungs-Server berechnet, und zwar auf der Grundlage der übermittelten Messdaten. Weiterhin können hierzu Feldstärkenmodelle herangezogen werden, wie sie aus der Netzplanung bekannt sind.

Für dieses Verfahren sind keine zusätzlichen Verarbeitungskapazitäten im Netzwerk und nur geringe Modifikationen am Endgerät nötig, etwa an der Software; so muss beispielsweise kein GPS-Empfänger zusätzlich installiert werden. Es ist lediglich erforderlich, die Messdaten, die (wie im 3GPP-Verfahren standardisiert) ohnehin bei den Netzmessungen zur Auswahl einer Versorgungszelle anfallen, in einer Form so zu speichern, dass diese ausgelesen und an den Positionsbestimmungs-Server übermittelt werden können. Beispielsweise können die Daten aus dem Speicher des Endgerätes ausgelesen werden und unter Nutzung eines Datenkanals (etwa in einem GPRS-Netz) unter Nutzung der IP-Schnittstelle an den Positionsbestimmungs-Server übermittelt werden.

Statt zahlreicher LMUs, die überall im Netz verteilt installiert werden müssen, ist hier lediglich ein zusätzlicher Verarbeitungsrechner im Netz zu implementieren. Hiermit kann eine deutliche Kostenersparnis in der Netzinfrastruktur realisiert werden. Auch die MLCs sind zum größten Teil entbehrlich, Serving-MLCs können ganz entfallen, ebenso Teile der Gateway-MLC, die für den Positionsbestimmungs-Server nicht benötigt werden.

Durch die Nutzung einer IP-Datenverbindung lässt sich auch die im IT-Umfeld komplexe und aufgrund spezieller Hardware teure SS7-Anbindung umgehen und weiters die Kommunikation zwischen Positionsbestimmungs-Server und Endgerät deutlich gegenüber bekannten Verfahren vereinfachen. Schließlich erfordert das erfindungsgemäße Verfahren auch nur einen minimalen zusätzlichen Nutzkanal-Netzverkehr.

In einer bevorzugten Ausgestaltung des erfindungsgemäßen Verfahrens betreffen die Messdaten die Feldstärke mindestens einer Basisstation des Mobilfunknetzes. Die Feldstärke bzw. der Empfangspegel einer Basisstation am Ort des Endgerätes ist ein wesentlicher Eingangsparameter für das Verfahren zur Zellauswahl, das von jedem Endgerät bspw. beim Einschalten durchgeführt wird. Diese Feldstärke liegt daher jedenfalls im Endgerät vor. Aus dieser kann auf den Abstand zwischen Basisstation und Endgerät geschlossen werden, wenn die Sendeleistung der Basisstation sowie ggf. weitere Daten, wie Keulenform und -richtung der Sendeantenne der Basisstation bekannt sind.

In einer besonders bevorzugten Ausführungsform der Erfindung betreffen die Messdaten weiterhin die Zell-ID der durch die Basisstation versorgten Zelle. Die Feldstärke und die Zell-ID werden dabei in Zuordnung zueinander im Messdatenspeicher gespeichert. Werden diese Messdaten an den Positionsbestimmungs-Server übermittelt, kann dieser über die Zell-ID die geografische Position der Basisstation erfassen bzw. von anderen Einrichtungen des Mobilfunknetzes abfragen. Aus der Feldstärke der Basisstation am Ort des Endgerätes, d.h. dem Empfangspegel, kann dann (bei bekannter Sendeleistung der Basisstation) der gegenseitige Abstand und damit der Bereich, in dem sich das Endgerät befindet, berechnet werden.

In einer weiteren Ausgestaltung des Verfahrens betreffen die Messdaten die Zelle, in der sich das Endgerät momentan befindet, und/oder zu dieser benachbarte Zellen. Üblicherweise vermisst ein Endgerät mindestens die Feldstärke der Basisstation, von der das Endgerät versorgt wird, sowie die Empfangspegel der benachbarten Basisstationen, typischerweise insgesamt etwa drei bis sieben Stationen. Werden diese Daten, oder ein Teil davon, an den Positionsbestimmungs-Server übertragen, kann dieser die Position des Endgerätes mit entsprechend hoher Genauigkeit bestimmen. Im Einzelfall kann es durchaus ausreichend sein, nur die Feldstärke der das Endgerät bedienenden Basisstation oder derjenigen Basisstation, die dem Endgerät am nächsten ist, zur Berechnung heranzuziehen. Dies gilt bspw. dann, wenn die Sendeantenne der Basisstation eine sehr ausgeprägte Richtcharakteristik aufweist. In diesem Falle ist die Ortsbestimmung mit geringen Fehlern aus nur einer Feldstärke möglich.

In weiteren Ausführungsformen der Erfindung werden die Messdaten vorteilhaft über eine IP-Verbindung vom Endgerät an den Positionsbestimmungs-Server übermittelt. Der Aufbau einer IP-Verbindung ist beispielsweise in GPRS- bzw. UMTS-Netzen besonders einfach möglich und kann bei entsprechend konfigurierten Endgeräten auch ohne aktive Eingaben des Benutzers durchgeführt werden. Sofern der Benutzer sich durch entsprechende Konfiguration des Endgerätes hiermit einverstanden zeigt, kann daher die Position des Endgerätes ohne sein Zutun jederzeit in einfacher Weise ermittelt werden.

In weiteren Ausgestaltungen des erfindungsgemäßen Verfahrens wird bei einem Zugriff auf den Positionsbestimmungs-Server, um hierdurch die berechnete Position des Endgerätes abzufragen, vom Positionsbestimmungs-Server eine Zugriffsberechtigung überprüft. Hierbei können bspw. die in der OMA ("Open Mobile Alliance", hier insbesondere in der Location bzw. Privacy Subgroup) beschriebenen Vorgehensweisen zur Anwendung kommen.

Hierdurch kann eine zügige Positionsbestimmung erreicht werden, da Berechtigungsanfragen an das HLR oder HSS (z.B. via "Any Time Interrogation", ATI) vermieden werden können. Natürlich ist es ebenso möglich, den Positionsbestimmungs-Server bei einem AA("Authentication/Authorization")-Server zu implementieren, um dessen Verfahren zur Prüfung von Zugangsberechtigungen in einfacher Weise zu nutzen. Ebenso kann der Positionsbestimmungs-Server auch an sich bekannte Verfahren nutzen, wie sie in AA-Servern zur Authentifizierung zur Anwendung kommen. Hierzu müssen sich die Anwendungen ggf. am Positionsbestimmungs-Server registrieren.

Bei bekannten OTD-Verfahren gelangt eine Anforderung einer Positionsbestimmung von einer Einheit oder Anwendung im Mobilfunknetz oder einem externen Netz zunächst zu einer Gateway-MLC (GMLC). Diese ermittelt den Aufenthaltsbereich ("Location Area") des Teilnehmers beim HLR bzw. HSS (für GSM- bzw. UMTS-Netze) und überprüft, ob die Anwendung autorisiert ist, die Position des Teilnehmers abzufragen. Eine zulässige Anforderung leitet das Gateway-MLC an ein Serving-MLC weiter. Dieses wählt die LMUs aus, berechnet aus den angelieferten Messdaten die Position und schätzt die dazugehörige Genauigkeit ab. Das Ergebnis wird dann an die Anwendung zurückgeliefert. Wie aus dieser Schilderung ersichtlich, sind für einige der bekannten Verfahren auch die Netzlatenzzeiten nicht unbedeutend, da zur Bestimmung der Position ein umfangreicher Nachrichtenverkehr erforderlich ist. Eine Ausführung eines erfindungsgemäßen Positionsbestimmungs-Servers, bei dem dieser zur Überprüfung einer Zugriffsberechtigung ausgebildet ist, kann diese Latenzzeiten verkürzen.

In einer Ausführungsform des erfindungsgemäßen Verfahrens wird die berechnete Position insbesondere an das Endgerät selbst übermittelt, welches hierfür im Positionsbestimmungs-Server registriert ist. Dies ist für Anwendungen zweckmäßig, die auf dem Endgerät laufen. Diese kann aufgrund der ihr zur Verfügung gestellten Positionsdaten gezielt weitere Daten mit lokalem Bezug aus einem Speicher im Endgerät oder aus dem Mobilfunknetz abfragen.

Eine Anordnung zur Positionsbestimmung eines Mobilfunk-Endgerätes in einem zellularen Mobilfunknetz weist zunächst einen Funktionsblock für Netzmessungen im Endgerät auf, der zur Durchführung von Netzmessungen zur Auswahl einer Versorgungszelle ausgebildet ist. Weiterhin liegt ein Messdatenspeicher zum Zwischenspeichern von Messdaten vor, die durch die Netzmessungen bestimmt werden. Erfindungsgemäß liegt weiterhin ein Messabruf-Funktionsblock im Endgerät vor und ein Positionsbestimmungs-Server im Mobilfunknetz bzw. beim Betreiber des Mobilfunknetzes.

Der Messabruf-Funktionsblock ist ausgebildet, um eine von dem Positionsbestimmungs-Server empfangene Messdaten-Anforderungsnachricht auszuwerten. Weiterhin ist er ausgebildet, um in Reaktion auf diese Auswertung Messdaten aus dem Messdatenspeicher auszulesen und um eine Messdaten-Antwortnachricht zu erstellen, die die ausgelesenen Messdaten betrifft, sowie die Antwortnachricht an den Positionsbestimmungs-Server zu senden.

Der Positionsbestimmungs-Server ist ausgebildet, um die Messdaten-Anforderungsnachricht an das Endgerät zu erstellen und zu senden, sowie die von dem Endgerät übermittelte Messdaten-Antwortnachricht zu empfangen und auszuwerten. Hierzu zählt insbesondere, die übermittelten Messdaten zu entnehmen und, basierend auf den übermittelten Messdaten, die Position des Endgerätes zu berechnen.

In einer weiteren Ausführungsform kann der Positionsbestimmungs-Server im engen Zusammenhang mit GMLCs verschiedener Betreiber auch das in der OMA spezifizierte In- und Outboundroaming durchführen.

In einer besonders bevorzugten Ausführungsform der Anordnung ist der Positionsbestimmungs-Server insbesondere dazu ausgebildet, Messdaten auszuwerten, die die Feldstärke mindestens einer Basisstation und die Zell-ID der durch diese Basisstation versorgten Zelle betreffen. In einer Weiterentwicklung der Anordnung ist der Positionsbestimmungs-Server dazu ausgebildet, auf Positionsinformationen von Basisstationen zuzugreifen oder diese zu berechnen, und die Position des Endgerätes basierend auf diesen Basisstations-Positionsinformationen zu berechnen.

In einer vorteilhaften Ausgestaltung einer erfindungsgemäßen Anordnung beinhaltet der Messabruf-Funktionsblock im Endgerät eine Java-Applikation. Hierdurch kann mindestens ein Teil der Funktionalität des Messabruf-Funktionsblocks auf besonders einfache Weise implementiert werden. Viele moderne Endgeräte basieren auf Java-Applikationen, so dass das Hinzufügen einer weiteren Applikation mit geringerem Aufwand möglich ist. So kann eine erfindungsgemäße Java-Applikation etwa einfach auf das Endgerät heruntergeladen werden.

In weiteren Ausgestaltungen einer erfindungsgemäßen Anordnung ist auf dem Endgerät eine Java-Laufzeitumgebung implementiert, im Zusammenhang mit der der Messabruf-Funktionsblock abläuft. Es sind speziell für Endgeräte Java-Laufzeitumgebungen bekannt, wie beispielsweise die J2ME("Java 2 Platform, Micro Edition")-Technologie. Eine derartige Umgebung stellt die wesentlichen Funktionalitäten für mobile Anwendungen bereit, einschließlich Benutzerschnittstelle, Funktionalitäten zur Verbindung mit dem Netzwerk, lokale Datenspeicherung und Applikations-Management. Eine Reihe von APIs werden für aufsetzende Applikationen bereitgestellt. In einer derartigen Umgebung kann das erfindungsgemäße Verfahren vorteilhaft mit besonders geringem Aufwand implementiert werden. So ist es beispielsweise auf besonders einfache Weise möglich, eine IP-Verbindung zwischen Positionsbestimmungs-Server und dem Messabruf-Funktionsblock herzustellen, über die die Messdaten übertragen werden.

Weitere Aspekte, Vorteile und Zweckmäßigkeiten der Erfindung ergeben sich aus den Unteransprüchen sowie der nachfolgenden Beschreibung anhand der Figuren. Von diesen zeigt:
Fig. 1 in schematisierter Form ein zellulares Mobilfunknetz, in dem das erfindungsgemäße Verfahren durchgeführt wird;
Fig. 2 eine vereinfachte Netzarchitektur eines erfindungsgemäßen Mobilfunknetzes;
Fig. 3 eine vereinfachtes Architekturschema eines Mobilfunknetzes mit Positionsbestimmungs-Server sowie den funktionalen Aufbau eines erfindungsgemäß ausgebildeten Endgerätes;
Fig. 4 ein Nachrichtenflussdiagramm, welches beispielhaft den Nachrichtenfluss gemäß einer Ausführungsform der Erfindung illustriert.

In allen Figuren sind gleiche und gleichwirkende Elemente mit gleichen Bezugszeichen versehen.

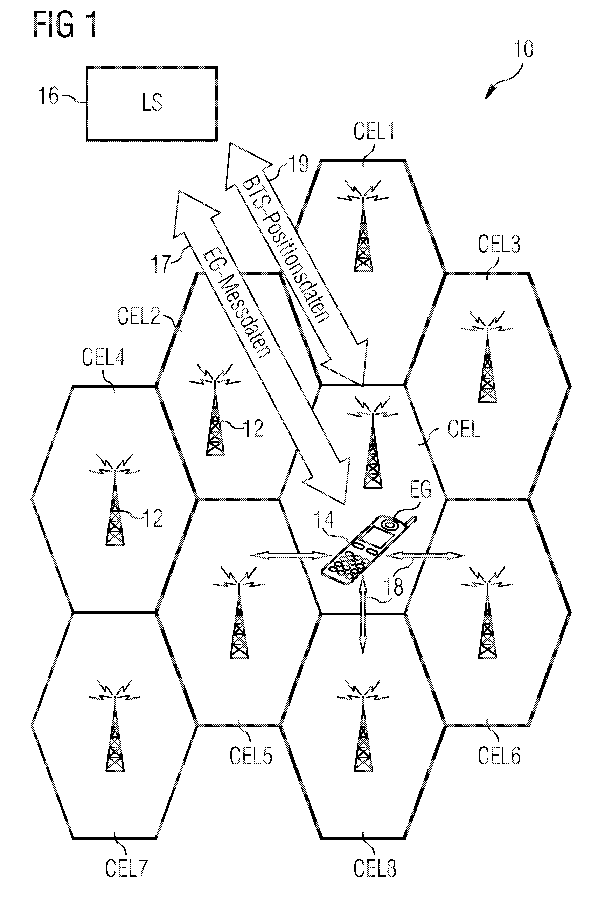

Bei dem in der Fig. 1 schematisch dargestellten Mobilfunknetz 10 kann es sich um ein GSM-, GPRS-, UMTS- oder auch TETRA("TErrestial TRunked Radio")-Netz oder dergleichen zellulares Mobilfunknetz handeln. Dieses Netz 10 weist eine Vielzahl von Zellen CEL und CEL1 - CEL8 auf. Jede dieser Zellen wird jeweils durch eine der symbolhaft angedeuteten Basisstationen 12 versorgt. In der Schemazeichnung der Fig. 1 sind alle Zellen von gleicher Größe und Form, tatsächlich können die Mobilfunkzellen aber ganz unterschiedliche Abmessungen haben. Die Basisstationen 12 (d.h. die BTSen der Basisstationen) müssen sich nicht im Zentrum einer Zelle befinden, sondern können sich je nach der Keulenform der Sendeantenne der Basisstationen etwa an einer Kante oder Ecke der zu versorgenden Zelle befinden.

In einer Zelle CEL des Mobilfunknetzes 10 befindet sich ein Endgerät 14. Nach dem Einschalten des Endgerätes 14 muss zunächst eine geeignete Funkzelle für die Versorgung gefunden werden, bevor der Benutzer Gespräche beginnen und entgegennehmen kann. Hierfür verfügt das Endgerät 14 über ein herkömmliches Zellauswahlverfahren.

Zur Auswahl einer Zelle erfasst das Endgerät 14 zunächst die Empfangspegel auf einer Mehrzahl von Frequenzträgern. Hierzu kann das Endgerät 14 beispielsweise auf eine Liste von etwa auf der SIM-Karte abgespeicherten Frequenzträgern zurückgreifen, die zu der zuletzt besuchten Zelle und deren Nachbarn gehören. Liegt eine solche Liste nicht vor, muss das Endgerät 14 alle möglichen, d.h. durch den Mobilfunkstandard vorgegebenen Trägerfrequenzen durchscannen. In dem Beispiel der Fig. 1 könnte das Endgerät 14 die Empfangspegel bzw. Feldstärken der Basisstationen der Zellen CEL, CEL1 - CEL8 vermessen.

Die Trägerfrequenzen werden nach Feldstärke sortiert in Form einer Liste im Endgerät 14 gespeichert. Ausgehend vom stärksten gemessenen Empfangspegel führt das Endgerät anschließend weitere bekannte Verfahren durch, um sich mit dem Mobilfunknetz zu synchronisieren und ggf. einen Verbindungsaufbau vorzubereiten. Sinkt der Empfangspegel einer der Basisstationen 12 unter einen kritischen Wert, nimmt das Endgerät 14 dessen gemessene Feldstärke nicht in die Liste der Messdaten auf. Im Beispielnetz der Fig. 1 könnte dies etwa die Basisstationen der weit von dem Endgerät 14 entfernten Zellen CEL4 und CEL7 betreffen.

Die Liste weist neben den Feldstärken der Basisstationen der Zellen CEL, CEL1 bis CEL8 die dazugehörigen Zell-IDs auf. Diese Zellkennung wird beispielsweise in einem GSM-System auf dem BCCH("Broadcast Common Control Channel")-Träger ausgestrahlt.

Die geschilderten Netzmessungen führt das Endgerät 14 nicht nur beim Anschalten durch, sondern auch dann, wenn sich der Teilnehmer mit dem Endgerät 14 im angeschalteten Zustand innerhalb des Mobilfunknetzes weiterbewegt. Die Netzmessungen dienen dazu, die Bedingungen für einen Zellwechsel zu bestimmen, für den u.a. erforderlich ist, dass der Empfangspegel einer Nachbarzelle höher ist als der Empfangspegel der momentan genutzten Zelle. Aufgrund der Häufigkeit der Netzmessungen ergeben die bei dem erfindungsgemäßen Verfahren ausgelesenen Messdaten die aktuelle Position des Endgerätes 14 mit ausreichender Genauigkeit. Alternativ kann eine Netzmessung, auch durch den Empfang einer Messdaten-Anforderungsnachricht angestoßen werden, wie sie unten genauer beschrieben wird.

Gemäß der Erfindung ist weiterhin eine Einrichtung im Netz 10 vorgesehen, nämlich ein Positionsbestimmungs-Server 16 (bzw. "Location Server", LS). Dieser führt die Berechnung der Position des Endgerätes 14 durch, weshalb im Endgerät 14 keine Kapazität zur Durchführung aufwendiger Berechnungen vorgehalten werden muss.

Für die Berechnung greift der Server 16 auf die Messdaten im Endgerät 14 (symbolisiert durch den Pfeil 17) zu, d.h. auf die Liste der zuletzt durchgeführten Netzmessung. Die Liste weist in dem Beispiel der Fig. 1 die Feldstärken der Basisstationen der Zellen CEL, CEL1 bis CEL8 sowie die dazugehörigen Zell-IDs auf. Es müssen jedoch nicht alle in der Liste aufgeführten Paare (Feldstärke/Zell-ID) abgefragt werden, sondern beispielsweise nur die ersten drei Einträge, d.h. diejenigen Basisstationen mit den stärksten Empfangspegeln. In dem in Fig. 1 dargestellten Beispiel betrifft das die Zellen CEL 5, CEL6 und CEL8, was durch die Pfeile 18 symbolisiert wird. Es kommt häufig vor, dass die Empfangspegel der Basisstationen von benachbarten Zellen stärker sind als derjenige der bedienenden Zelle.

Der Server 16 greift ferner auf die geografischen Positionen bzw. Koordinaten der Basisstationen der Zellen des Mobilfunknetzes 10 zu, symbolisiert durch den Pfeil 19. Diese Abfrage muss nicht an die Basisstationen selbst gerichtet sein, sondern kann sich auf eine Datenbank beziehen, wie unten genauer geschildert.

Aus der Position einer Basisstation sowie der Sendeleistung und Richtungscharakteristik (Keulenform) einer Basisstation und der Stärke des Feldes dieser Basisstation, wie sie von dem Endgerät 14 gemessen wurde, kann dann der Server 16 nach bekannten Algorithmen zur Ortsbestimmung einen geografischen Bereich bestimmen, in dem das Endgerät 14 positioniert sein muss. Dieser Bereich kann beispielsweise eine Hyperbelform haben. Führt der Location Server 16 diese Berechnung etwa für drei Basisstationen durch, befindet sich das Endgerät 14 am Schnittpunkt dreier Hyperbeln.

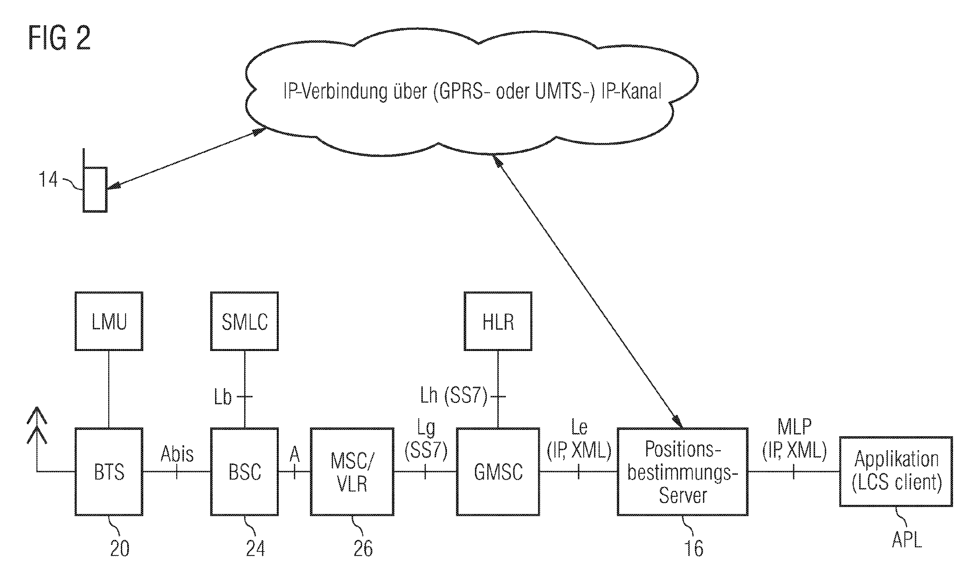

Die Fig. 2 zeigt in Form einer schematisierten Übersicht einige wesentliche Netzknoten des Mobilfunknetzes 10 aus Fig. 1. Zur Herstellung einer IP-Verbindung zwischen Endgerät 14 und Positionsbestimmungs-Server 16 ist eine Funkverbindung zwischen dem Endgerät 14 und einer BTS 20 erforderlich. Die Verbindung verläuft weiterhin über eine BSC 24, einen zentralen Netzknoten 26 (hier eine MSC/VLR) und eine Gateway-MLC. Mit der BTS 20 und BSC 24 können eine LMU und eine Serving-MLC verbunden sein, wie sie für bekannte Verfahren zur Positionsbestimmung benötigt werden.

Die klassischen Netzkomponenten BTS 20, BSC 24, MSC 26, HLR und GMLC sind in dem in Fig. 2 dargestellten Beispiel untereinander mittels des SS7-Protokollstacks verbunden. Die Anbindung des Positionsbstimmungs-Servers 16 geschieht über eine IP-Verbindung. Auf die gleiche Weise erfolgt die Datenübermittlung zwischen dem Server 16 und einer anfragenden Applikation bzw. einem LCS-client APL.

Die Verbindung zwischen Endgerät 14 und Server 16 basiert auf dem IP-Protokoll, so dass am Server 16 kein SS7-Stack erforderlich ist. Über diese Verbindung können die Messdaten vom Endgerät angefordert und von diesem übermittelt werden (Pfeil 17 in Fig. 1).

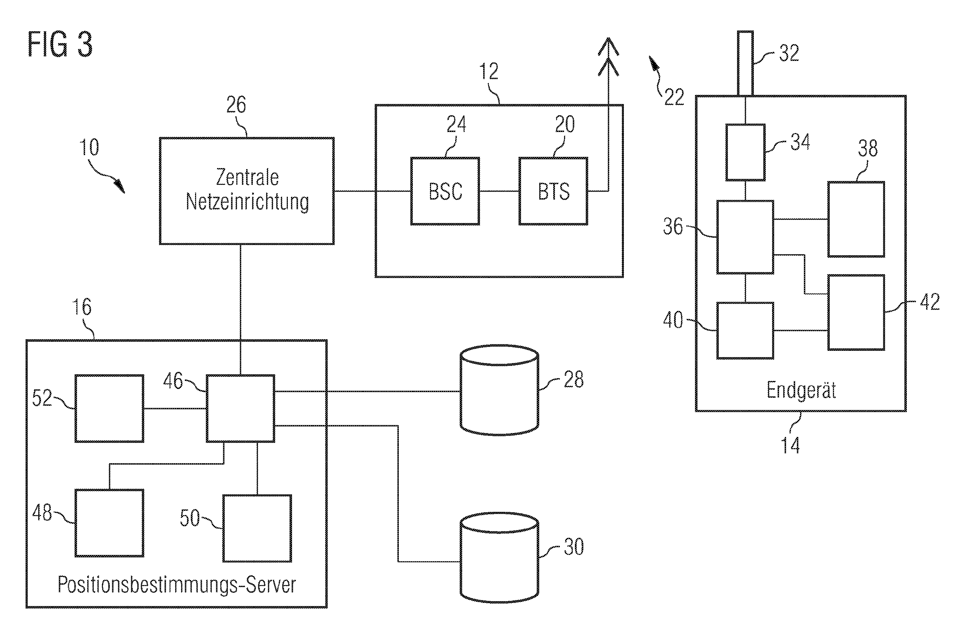

Die in den Fig. 1 und 2 dargestellten, erfindungswesentlichen Komponenten werden im folgenden genauer erläutert. In der Fig. 3 werden einige Knoten des Mobilfunknetzes 10 sowie das Endgerät 14 schematisch dargestellt. Das Mobilfunkgerät 14 steht mit einer Basisstation 12, genauer gesagt mit der BTS 20 der Basisstation 12, in Funksignalverbindung. Hierunter soll ganz allgemein der Austausch von Funksignalen zwischen den Einheiten 14 und 20 über eine Funkstrecke 22 verstanden werden. Dies betrifft insbesondere auch die Erfassung der von der BTS 22 ausgesendeten Broadcast-Signale im BCCH-Kanal in die Zelle (CEL in der Fig. 1), in der sich das Endgerät 14 befindet.

Zur Basisstation 12 gehört ferner die BSC ("Base Station Controller") 24, wie dies dem Fachmann bekannt ist. Die BSC 24 steht mit weiteren Netzknoten des Mobilfunknetzes 10 in Verbindung. In dem in Fig. 3 gezeigten Ausführungsbeispiel ist mit der BSC 24 insbesondere eine zentrale Netzeinrichtung 26 verbunden. Hierbei kann es sich statt um eine MSC (vgl.
Fig. 2) auch etwa um einen SGSN ("Serving GPRS Support Node") in einem GPRS- oder UMTS-Netz handeln.

An die Netzeinrichtung 26 können zahlreiche weitere Knoten angeschlossen sein, von denen in der Fig. 3 nur der Positionsbestimmungs- bzw. Location Server 16 gezeigt ist. Der Server 16 hat wiederum Zugriff auf eine Datenbank 28 bzw. Datenbasis mit Positionen und maximalen Sendeleistungen der Basisstationen des Netzes 10. Diese Datenbasis 28 kann etwa als Server im Rahmen eines Teilnetzes für das Netzmanagement des Mobilfunknetzes 10 vorliegen. Ferner hat der Location Server 16 Zugriff auf einen Server 30 mit einer Authentifizierungs-Datenbasis. Der Zugriff vom Location Server 16 auf die Datenbasen 28 und 30 kann direkt erfolgen, wie in der Fig. 3 dargestellt, oder über den zentralen Netzknoten 26.

Der Positionsbestimmungs-Server 16 verfügt über eine Steuerungseinheit 46, die die weiteren Einheiten des Servers steuert, von denen die erfindungswesentlichen in Fig. 3 dargestellt sind. Insbesondere liegt eine Erstellungseinheit 48 zum Erstellen von Messdaten-Anforderungsnachrichten sowie eine Messdaten-Auswertungseinheit 50 vor. Von dieser berechnete Positionsdaten des Endgerätes 14 können in einem Positionsdatenspeicher 52 gespeichert werden, wie unten genauer erläutert werden wird.

Das Endgerät 14 verfügt über eine Antenne 32 zum Senden und Empfangen von Funksignalen. Die Antenne 32 ist an eine Sende-/Empfangseinheit 34 angeschlossen, die empfangene Funksignale an eine zentrale Steuerungseinheit 36 des Endgerätes 10 weiterleitet bzw. von dieser angesteuert wird, um Funksignale über die Antenne 32 zu senden. Die Steuerungseinheit 36 ist für die Kommunikation (über die Funkstrecke 12) mit Einrichtungen des Mobilfunknetzes 10 ausgebildet und steuert zu diesem Zweck die Sende-/Empfangseinheit 34 gemäß den Protokollen des Mobilfunkstandards für das Mobilfunknetz 10 an.

Nach Einschalten des Endgerätes 14 über eine (nicht gezeigte) Eingabeeinheit für Benutzerbefehle veranlasst die Steuerungseinheit 36 eine Einheit für Netzmessungen 38 ("Network Measurement Unit", NMU), Netzmessungen in der oben in Zusammenhang mit der Fig. 1 geschilderten, dem Fachmann bekannten Weise durchzuführen. Die NMU 38 kann auch ein Teil der zentralen Steuerungseinheit 36 sein, sie ist jedoch aus Gründen der Klarheit in der Fig. 3 getrennt von dieser dargestellt. Das Ergebnis der Netzmessungen, eine Liste der gemessenen Feldstärken mit den dazugehörigen Zellenkennungen bzw. Zell-IDs, geordnet nach abnehmendem Empfangspegel, wird an die Steuerungseinheit 32 zurückgeliefert, die diese Liste in einem Messdatenspeicher 40 speichert.

Die in dem Messdatenspeicher 40 gespeicherten Feldstärken und Zell-IDs werden herkömmlich dafür verwendet, eine erneute Netzmessung bei Wiedereinschalten des Endgerätes 14 zu beschleunigen, ein Location Update vorzubereiten oder einen Zellwechsel im Idle-Modus oder auch während einer laufenden Sprachverbindung vorzubereiten.

Erfindungsgemäß liegt in dem Endgerät 14 ferner ein Messabruf("Location Information Retrieval", LIR)-Funktionsblock 42 vor, der ebenfalls ein Teil der Steuerungseinheit 32 sein kann, jedoch in der Fig. 3 als eigenständiger Block dargestellt ist.

Bei dem Endgerät 14 kann es sich beispielsweise um ein sogenanntes "Java Phone" handeln, also um ein Gerät, dessen wesentliche Funktionsmerkmale in Form von Java-Applikationen implementiert sind. Der LIR-Funktionsblock kann in diesem Falle zu einem wesentlichen Teil aus einer Java-Applikation bestehen.

Auf dem Endgerät 14 kann ferner eine Java-Laufzeitumgebung implementiert sein, etwa eine J2ME-Umgebung. Auf Basis dieser Technologie können besonders einfach IP-Verbindungen in GPRS- und UMTS-Netzen hergestellt werden, über die dann erfindungsgemäß die Messdaten an den Location Server 16 übertragen werden.

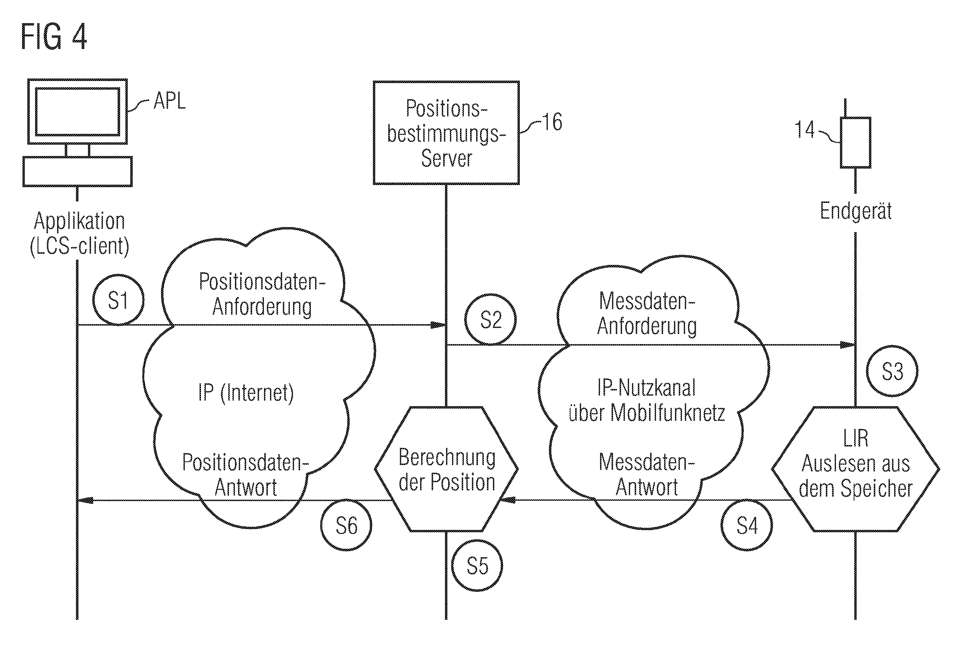

Ein Beispiel für den Ablauf des erfindungsgemäßen Verfahrens wird nunmehr anhand des Nachrichtenflussdiagramms der Fig. 4 beschrieben.

Als Nachrichten versendende bzw. empfangende Einheiten sind in der Fig. 4 der Location Server 16 sowie das Endgerät 14 mit LIR-Funktionsblock 42 dargestellt. Als weitere Einheit ist eine Applikation APL dargestellt.

Der Beispielsablauf der Fig. 4 beginnt damit, dass die Applikation APL (aus Sicht des Positionsbestimmungs-Servers 16 ein LCS-client) in einem Schritt S1 eine Positionsdaten-Anforderungsnachricht an den Positionsbestimmungs- bzw. Location Server 16 sendet. Üblicherweise wird dazu eine IP-basierte Internetverbindung benutzt. Die Applikation APL kann sich auf einem Computer, aber auch auf einem Mobilfunkendgerät ("Mobile Device"), befinden, also einem Mobiltelefon oder einem mobil einsetzbaren Computer. Im zweiten Fall benutzt die Applikation APL die gleiche Umgebung (in englischer Fachsprache eine sogg. "mobile Internet environment"), wie sie für die nachfolgend beschriebene Übertragung der Messdaten genutzt wird. Selbstverständlich könnten auch andere Datenübertragungtechnologien (Festverbindung, SMS, ...) verwendet werden. Die Applikation APL kann bspw. durch eine Benutzeranforderung dazu veranlasst werden, die Positionsdaten-Anforderung (S1) zu generieren und zu senden. Auslöser kann aber ebenso eine automatisch generierte Aktion sein, z.B. ein zyklisches Monitoring. Dem Fachmann sind derartige Auslöser bekannt; welcher Art der Auslöser im Detail ist, ist für die Erfindung nicht wesentlich.

Als Ergebnis des Schrittes S1 wird im Server 16 die von der Applikation APL versendete Positionsdaten-Anforderungsnachricht empfangen. In Schritt S2 sendet der Location Server 16 in Reaktion auf die empfangene Nachricht eine Messdaten-Anforderungsnachricht an das zu lokalisierende Endgerät 14, genauer an den Messabruf-Funktionsblock 42. Hierzu baut der Server 16 zunächst eine IP-Verbindung auf. Dies ist in einem bekannten Mobilfunknetz 10, das beispielsweise auf dem GPRS/UMTS-Standard beruht, standardgemäß vorgesehen, weshalb auf die Details dieses Verbindungsaufbaus hier nicht weiter eingegangen wird. Das Endgerät 14 kann ein Java Phone sein, auf dem eine Java-Laufzeitumgebung (beispielsweise gemäß der J2ME-Technik) implementiert ist. Ein derartiges Gerät ist ebenfalls für den Aufbau von IP-Verbindungen vorgesehen, so dass auch hier die Details nicht weiter erläutert werden.

Die über die IP-Verbindung an das Endgerät 14 gesendete Anforderungsnachricht zur Abfrage der Messdaten wird in der Erstellungseinheit 48 des Positionsbestimmungs-Servers 16 (dieses und die folgenden Bezugszeichen beziehen sich auf Fig. 3) erstellt und über die Steuerungseinrichtung 46 des Servers versendet.

Die Anforderungsnachricht gelangt über die Funkstrecke 20 an das Endgerät 14 und wird über die Empfangseinheit 34 an die zentrale Steuerungseinheit 36 des Endgerätes übertragen. Diese führt eine Vorauswertung der erhaltenen Anforderungsnachricht durch und leitet die Anforderung an den Messabruf-Funktionsblock 42 weiter. Dieser wird (Schritt S3) dadurch veranlasst, die Liste der zuletzt gemessenen Feldstärken der umgebenden Basisstationen aus dem Messdatenspeicher 40 auszulesen.

Hierbei sind verschiedene Ausführungsformen der Anforderungsnachricht, bzw. der Reaktion des Messabruf-Funktionsblocks 42 auf die Anforderungsnachricht denkbar. So könnte in der Nachricht etwa ein Parameter enthalten sein, der angibt, wie viele Empfangspegel mit den dazugehörigen Zell-IDs auszulesen sind, beispielsweise nur die stärksten drei, oder aber alle in der Liste aufgeführten. Ebenso ist es denkbar, einen Parameter mit auszuwerten, der entsprechend der "Privacy"-Einstellungen (Datenschutz) vor dem Auslesen der Messdaten eine Nachricht oder interaktive Anfrage an den Benutzer des Mobiltelefons (über dessen Display) ausgibt und die Daten dann entsprechend der Reaktion des Benutzers liefert. Schließlich könnte ein Parameter enthalten sein, der veranlasst, dass das Endgerät 14 eine neuerliche Netzmessung durchführt, um so aktuellste Messdaten zu erhalten.

Die im Schritt S3 ausgelesenen Messdaten werden vom Messabruf-Funktionsblock 42 in eine Messdaten-Antwortnachricht eingestellt. Diese wird vom Funktionsblock 42 an die zentrale Steuerungseinheit 36 übergeben. Zusammen mit der Zieladresse, d.h. der Adresse des Positionsbestimmungs-Servers 16, und der zugehörigen Anfragereferenz wird die Antwortnachricht dann im Schritt S4 über die existierende IP-Verbindung und die Funkstrecke 20 an den Server 16 übermittelt.

In dem Ausführungsbeispiel der Fig. 4 erfolgt die Übermittlung der Nachrichten in den Schritten S2 und S4 über IP-Protokoll-Verbindungen. Selbstverständlich kann dazu ein anderes Transportprotokoll über den Funknutzkanal verwendet werden.

Der Schritt S4 endet damit, dass die Antwortnachricht in der Steuerungseinheit 46 des Location Servers 16 empfangen und (vor-)ausgewertet wird. In Reaktion darauf, dass es sich um eine Messdaten-Antwortnachricht handelt, wird diese an die Messdaten-Auswertungseinheit 50 weitergeleitet. Hier werden die vom Endgerät 14 gelieferten Messdaten entnommen und ggf. zwischengespeichert.

Zur Bestimmung der Position des Endgerätes 14 im Schritt S5 anhand der Feldstärken bzw. Empfangspegel der umgebenden Basisstationen sind Informationen betreffend den Zusammenhang zwischen basisstationsbezogenen Feldstärken und den zugeordneten geographischen Koordinaten erforderlich. Hierfür greift die Auswertungseinheit 50 auf einen Datenbasis-Server 28 lesend zu. Der Datenbasis-Server 28 enthält eine Liste von Basisstationen des Mobilfunknetzes 10, beispielsweise aller Basisstationen oder der Basisstationen einer geografischen Region. Zu jeder Basisstation sind die Zell-ID, die geographische Position und die maximale Sendeleistung verzeichnet, mit der die Basisstation auf dem BCCH sendet. Des weiteren sind Informationen über die Ausrichtung (Keule) der Basisstation vorhanden. Der Server 28 kann etwa Teil eines Unternetzwerkes des Mobilfunknetzes 10 sein, das zur Netzplanung und für das Netzwerk-Management dient, aber auch eine von dieser Datenbank abgeleitete und z.B. durch Referenzmessungen verbesserte Datensammlung enthalten. In diesem Fall wäre die Aktualität der Daten in der Datenbasis 28 durch eine entsprechende Administrierung oder software-technische Aktualisierung zu gewährleisten.

Aus den Positionen der Basisstationen, deren Sendeleistung sowie der gemessenen Feldstärke einer jeden Basisstation kann der Ort des Endgerätes berechnet werden. Die hierfür zu verwendenden Algorithmen basieren auf der Dämpfung und Ausbreitung elektromagnetischer Funkträgerwellen und sind bekannt (und werden zum Beispiel auch für die Berechnung der Netzstrukturen herangezogen). Als Ergebnis der Positionsbestimmung übergibt die Auswertungseinheit 50 die berechnete Position des Endgerätes 14, ggf. ergänzt um eine Angabe zur Genauigkeit der Position, d.h. zum Fehlerbereich ("± 30 m in Ost-West-Richtung, ± 10 m in Nord-Süd-Richtung") an die Steuerungseinheit 46.

In einem Schritt S6 werden die berechneten Positionsdaten vom Positionsbestimmungs-Server 16 an die Anwendung APL auf dem Endgerät 14 übermittelt. Dies kann auf Basis der gleichen Verbindungstechnologie wie bei der Positionsdaten-Anforderung erfolgen, üblicherweise über IP.

Die von der Anwendung APL auf dem Endgerät 14 empfangenen Positionsdaten werden dann entsprechend dem genauen Zweck dieser Anwendung weiterverarbeitet.

Das anhand Fig. 4 geschilderte Beispiel kann durch Einsatz geeigneter Protokolle abgewandelt werden. So ist es z. B. denkbar, dass das zu lokalisierende Endgerät auf Anforderung zyklisch, automatisch und asynchron seine Messdaten an den Positionsbestimmungs-Server sendet, der die Ergebnisse dann für den späteren Abruf durch Applikationen speichert (Beispiel: Fahrzeugverfolgung). Ebenso möglich ist die zeitgesteuerte Positionsabfrage durch den Positionsbestimmungs-Server auf eine entsprechende Positionsdaten-Anforderungsnachricht von einer Applikation ("triggering request").

Weiterhin kann der Server 16 vorteilhaft dazu eingerichtet sein, die Berechtigung der anfordernden Einrichtung bzw. Anwendung zu überprüfen. Hierzu kann eine entsprechende Authentifizierungs-Überprüfungsnachricht an eine Authentifizierungs- bzw. Registrierungsdatenbasis 30 (vgl. Fig. 3) übermittelt werden. Ist eine Anwendung in der Datenbasis 30 mit einem Eintrag repräsentiert, beispielsweise mit einem Anwendungsnamen, einer IP-Adresse und ggf. einem Passwort, verläuft die Überprüfung der Registrierung bzw. Authentifizierung positiv. Das Ergebnis der Überprüfung wird in einer Überprüfungs-Antwortnachricht an den Positionsbestimmungs-Server 16 zurückgesendet. In dem in der Fig. 4 dargestellten Beispiel wäre die Berechtigung der Anwendung APL zu überprüfen (in der Fig. 4 nicht gezeigt).

In den Figuren ist stets nur ein Positionsbestimmungs-Server gezeigt. Natürlich können im Mobilfunknetz mehrere dieser Server vorliegen, die etwa bestimmte geographische Regionen bzw. Teilnetze betreffen.

Die vorstehende Beschreibung ist beispielhaft zu verstehen und soll den erfindungsgemäßen Rahmen, der durch die nachfolgenden Ansprüche angegeben wird, keinesfalls beschränken.

## Patentansprüche

1. Verfahren zur Positionsbestimmung eines Endgerätes (14) in einem zellularen Mobilfunknetz (10),
wobei im Endgerät (14) zur Auswahl einer Versorgungszelle (CEL) Netzmessungen durchgeführt werden,
mit folgenden Schritten:
- Übermitteln (S2) einer Messdaten-Anforderungsnachricht von einem Positionsbestimmungs-Server (16) an das Endgerät (14),
- Auslesen (S3) von durch die Netzmessungen bestimmten Messdaten aus einem Messdatenspeicher (40) im Endgerät (14) in Reaktion auf die Anforderungsnachricht,
- Übermitteln (S4) einer Messdaten-Antwortnachricht mit den ausgelesenen Messdaten vom Endgerät (14) an den Positionsbestimmungs-Server (16),
- Berechnen (S5) der Position des Endgerätes (14), basierend auf den übermittelten Messdaten, im Positionsbestimmungs-Server (16).

2. Verfahren nach Anspruch 1,
**dadurch gekennzeichnet, dass**
das Übermitteln einer Messdaten-Anforderungsnachricht (S2) und/oder das Übermitteln einer Messdaten-Antwortnachricht (S4) unter Nutzung des Datenkanals des Betreibers des Mobilfunknetzes (10) erfolgt.

3. Verfahren nach Anspruch 1 oder 2,
**dadurch gekennzeichnet, dass**
das Auslesen der Messdaten (S3) einmalig oder mehrfach zeitgesteuert erfolgt.

4. Verfahren nach einem der vorhergehenden Ansprüche,
**dadurch gekennzeichnet, dass**
das Auslesen der Messdaten (S3) unter Berücksichtigung der Datenschutz-Einstellungen eines Benutzers des Endgerätes (14) erfolgt.

5. Verfahren nach einem der vorhergehenden Ansprüche,
**dadurch gekennzeichnet, dass**
die Messdaten die Feldstärke mindestens einer Basisstation (12, 20) des Mobilfunknetzes (10) betreffen.

6. Verfahren nach einem der vorhergehenden Ansprüche,
**dadurch gekennzeichnet, dass**
die Messdaten die Zell-ID der durch die Basisstation (12, 20) versorgten Zelle (CEL) betreffen, wobei Feldstärke und Zell-ID in Zuordnung zueinander im Messdatenspeicher (40) gespeichert werden.

7. Verfahren nach einem der vorhergehenden Ansprüche,
**dadurch gekennzeichnet, dass**
die Messdaten die Zelle (CEL), in der sich das Endgerät (14) momentan befindet, und/oder zu dieser benachbarte Zellen (CEL1 - CEL8) betreffen.

8. Verfahren nach einem der vorhergehenden Ansprüche,
**dadurch gekennzeichnet, dass**
zum Berechnen der Position des Endgerätes (14) weitere Informationen herangezogen werden, insbesondere die Position der Basisstation (12, 20) in der Zelle (CEL), in der sich das Endgerät (14) momentan befindet, und/oder die Positionen der Basisstationen (12,20) der zu dieser benachbarten Zellen (CEL1 - CEL8).

9. Verfahren nach einem der vorhergehenden Ansprüche,
**dadurch gekennzeichnet, dass**
die Messdaten über eine IP-Verbindung vom Endgerät (14) an den Positionsbestimmungs-Server (16) übermittelt werden.

10. Verfahren nach einem der vorhergehenden Ansprüche,
**dadurch gekennzeichnet, dass**
bei einem Zugriff auf den Positionsbestimmungs-Server (16), um die berechnete Position des Endgerätes (14) abzufragen, vom Positionsbestimmungs-Server (16) eine Zugriffsberechtigung überprüft wird.

11. Verfahren nach einem der vorhergehenden Ansprüche,
**dadurch gekennzeichnet, dass**
die berechnete Position an das Endgerät (14) oder an eine anfordernde Applikation übermittelt wird.

12. Anordnung zur Positionsbestimmung eines Endgerätes (14) in einem zellularen Mobilfunknetz (10), mit
einem Funktionsblock für Netzmessungen (38) im Endgerät (14), der zur Durchführung von Netzmessungen zur Auswahl einer Versorgungszelle (CEL) ausgebildet ist,
einem Messdatenspeicher (40) zum Zwischenspeichern von Messdaten, die durch die Netzmessungen bestimmt werden, sowie einem Messabruf-Funktionsblock (42) im Endgerät (14) und einem Positionsbestimmungs-Server (16), wobei
der Messabruf-Funktionsblock (42) ausgebildet ist,
- eine von dem Positionsbestimmungs-Server (16) empfangene Messdaten-Anforderungsnachricht auszuwerten,
- in Reaktion auf die Auswertung Messdaten aus dem Messdatenspeicher (40) auszulesen, und
- eine Messdaten-Antwortnachricht zu erstellen, die die ausgelesenen Messdaten betrifft,
- die Messdaten-Antwortnachricht an den Positionsbestimmungs-Server (16) zu senden,
und der Positionsbestimmungs-Server (16) ausgebildet ist,
- die Messdaten-Anforderungsnachricht an das Endgerät (14) zu erstellen und zu senden,
- die von dem Endgerät (14) übermittelte Messdaten-Antwortnachricht zu empfangen und auszuwerten, insbesondere die übermittelten Messdaten zu entnehmen, und
- basierend auf den übermittelten Messdaten, die Position des Endgerätes (14) zu berechnen.

13. Anordnung nach Anspruch 12,
**dadurch gekennzeichnet, dass**
der Positionsbestimmungs-Server (16) ausgebildet ist, Messdaten auszuwerten, die die Feldstärke mindestens einer Basisstation (12, 20) und die Zell-ID der durch diese Basisstation (12, 20) versorgten Zelle (CEL) betreffen.

14. Anordnung nach Anspruch 12 oder 13,
**dadurch gekennzeichnet, dass**
der Positionsbestimmungs-Server (16) ausgebildet ist, auf Positionsinformationen von Basisstationen (12, 20) zuzugreifen oder diese zu berechnen, und
die Position des Endgerätes (14) basierend auf den Basisstations-Positionsinformationen und/oder Feldstärkeinformationen zu berechnen.

15. Anordnung nach einem der Ansprüche 12 bis 14,
**dadurch gekennzeichnet, dass**
der Messabruf-Funktionsblock (42) ausgebildet ist, die Messdaten-Anforderungsnachricht und/oder die Messdaten-Antwortnachricht über eine IP-Verbindung zu senden bzw. zu empfangen.

16. Anordnung nach einem der Ansprüche 12 bis 15,
**dadurch gekennzeichnet, dass**
der Messabruf-Funktionsblock (42) eine Java-Applikation beinhaltet.

17. Anordnung nach einem der Ansprüche 12 bis 16,
**dadurch gekennzeichnet, dass**
auf dem Endgerät (14) eine Java-Laufzeitumgebung implementiert ist, im Zusammenhang mit der der Messabruf-Funktionsblock (42) abläuft.

18. Anordnung nach einem der Ansprüche 12 bis 17,
**dadurch gekennzeichnet, dass**
der Positionsbestimmungs-Server (16) ausgebildet ist, um in Reaktion auf eine empfangene Positionsdaten-Anforderungsnachricht, mit der eine die berechnete Position des Endgerätes betreffende Positionsdaten-Antwortnachricht angefordert wird, eine Zugriffsberechtigung zu überprüfen.
